# EUROPEAN PATENT APPLICATION

(11) **EP 4 546 713 A1**
(43) Date of publication of application: **30.04.2025**
(21) Application number: 23205925.3
(22) Date of filing: 25.10.2023
(51) Int. Cl.: H04L 9/40, H04W 12/084

(54) **SYSTEM AND METHOD USING SELF-ISSUED OPENID PROVIDER AUTHORIZATION WITH EXTENDED VERIFIABLE ATTRIBUTES**

(71) Applicant: THALES DIS CPL USA, INC., Austin, TX 78759 (US)
(72) Inventor: JAIMAN, Yateendra, 201306 Uttar Pradesh (IN); KHANNA, Rajat, 201301 Uttar Pradesh (IN); SINGH, Abhishek Kumar, 226010 Uttar Pradesh (IN); SIKRI, Yashika, 122004 Haryana (IN)
(74) Representative: Lotaut, Yacine Diaw

(57) **Abstract**

A system (100) or method (200, 300) for self-issued OpenID provider (SIOP) authorization to a relying party application (204) can include a mobile device (206) having validation attributes, one or more processors and memory operatively coupled to the one or more processors, where the memory includes computer instructions which when executed by the one or more processors causes the one or more processors to perform certain operations. The operations can include fetching (302) an SIOP request with the validation attributes, validating (304) the validation attributes, requesting (306) user claims from a holder, receiving (308) user claims from the holder, and allowing (314) access to the relying party application upon validating a predetermined number of validation attributes according to a policy (108).

## Description

### TECHNICAL FIELD

The present embodiments relate generally to systems and methods of authentication and access management. More particularly, the system and method relate to a Self-Issued OpenID Provider (SIOP) authorization with extended verifiable attributes used for supporting assessment of trust across device, user, and application.

### BACKGROUND

Standard parameter-centric verification in SIOP based authentication is limiting with respect to the various scenarios in which authentication might be desired. Self-Issued Open ID Provider (SIOP) relies on the use of standard protocol parameters in the authorization request to OpenID Provider (OP). The current SIOP protocol standard does not ensure to provide secure and frictionless access to a Relying Party (RP). The current SIOP protocol standard also fails to provide a more adaptive authentication and authorization method.

Some attempts have been made in making improvements, but more can be done. OpenID Connect is a relatively newer protocol that defines mechanisms by which an End-User can leverage an OpenID Provider (OP) to release identity information (such as authentication and claims) to a Relying Party (RP) which can act on that information. In this model, the RP trusts assertions made by the OP, i.e. the OP is the issuer of these assertions.

An existing specification extends OpenID Connect with the concept of a Self-Issued OpenID Provider (Self-Issued OP or SIOP), an OP controlled by the End-User. The Self-Issued OP does not itself assert identity information about this End-user. Instead the End-user becomes the issuer of identity information. Using Self-Issued OPs, End-Users can authenticate themselves with Self-Issued ID Tokens signed with keys under the End-user's control and present self-attested claims directly to the RPs. Self-Issued OPs can also present cryptographically verifiable claims issued by the third parties trusted by the RPs, when used with separate specifications such as [OpenID4VP], or Aggregated and Distributed Claims defined in Section 5.6.2 of [OpenID.Core]. This allows End-Users to interact with RPs, without RPs interacting directly with claims issuers.

End-user control does not imply the Self-Issued OP is entirely locally hosted on an End-user's device. There are different ways to implement a Self-Issued OP: the Self-Issued OP can completely run on a End-user device; it might utilize cloud components; or it might completely run in the cloud. The crucial difference between a traditional OP and the Self-Issued OP is that the Self-Issued OP allows the End-user to determine identifiers and claims released to the RP. [OpenID.Core] defines that an OP releases End-User authentication information in the form of an ID Token. An RP will trust an ID Token based on the relationship between the RP and the issuer of this ID Token.

There are notable differences between OpenID Connect Core and Self-Issued OP Models. In the traditional OpenID Connect model, when an OP acts as an ID Token issuer, it is common for the OP to have a legal stake with the RPs and a reputation-based stake with both RPs and End-Users to provide correct information. In the Self-Issued OP model, the RP's trust relationship is directly with the End-User. The Self-Issued OP allows the End-User to authenticate towards the RP with an identifier controlled by the End-User instead of an identifier assigned to the End-User by a third-party provided OP. An End-User controlled identifier might be a public key fingerprint or a Decentralized Identifier (see [DID-Core]). This changes the trust model and the way signatures of the Self-Issued ID Tokens are validated in comparison to the traditional OpenID Connect model.

In traditional OpenID Connect, the ID Token is signed by the OP as an entity, identified by the iss claim. The RP uses this identifier to obtain the key material to validate the ID Token's signature. This signature ensures the data is attested by the OP the RP trusts for that purpose and it also is an attestation of what service produced the ID Token (since both are the same entity). In the Self-Issued OP case, the ID Token is self-signed with a private key under the user's control, identified by the sub claim. The RP uses this identifier to obtain the key material to validate the ID Token's signature. Unlike traditional OpenID Connect, this signature can no longer be used to cryptographically validate the software or service that created the ID Token. Self-issued ID Token can be detected when the iss value is set to the user identifier conveyed in the sub Claim, because from a conceptual perspective, the issuer of the ID Token is the user. This also aligns Self-Issued OP with the way self-signed certificates and W3C Verifiable Presentations handle subject and issuer of such certificates and assertions, respectively. Because a Self-Issued OP within the End-User's control does not have the legal, reputational trust of a traditional OP, claims about the End-User (e.g., birthdate) included in a Self-Issued ID Token, are by default self-asserted and non-verifiable. A Self-Issued OP can also present cryptographically verifiable claims issued by the third-party sources trusted by the RP, as defined in separate specifications such as [OpenID4VP] or Aggregated and Distributed Claims in Section 5.6.2 of [OpenID.Core].

Terms and Definitions. Common terms in this document come from four primary sources: [OpenID.Core], [VC-DATA] and [DID-Core]. In the case where a term has a definition that differs, the definition below is authoritative.

Self-Issued OpenID Provider (Self-Issued OP) is an OpenID Provider (OP) used by the End-users to prove control over a cryptographically Verifiable Identifier.

Self-Issued Request is a Request to a Self-Issued OP from an RP.

Self-Issued Response is a Response to an RP from a Self-Issued OP.

Self-Issued ID Token is an ID Token signed using the key material controlled by the End-User. It is issued by a Self-Issued OP.

Cryptographically Verifiable Identifier is an identifier that is either based upon or resolves to cryptographic key material that can be used to verify a signature on the ID Token or the Self-Issued Request.

Trust Framework is a legally enforceable set of specifications, rules, and agreements that govern a multi-party system established for a common purpose, designed for conducting specific types of transactions among a community of participants, and bound by a common set of requirements, as defined in OIX.

Verifiable Credential (VC) is a verifiable credential is a tamper-evident credential that has authorship that can be cryptographically verified. Verifiable credentials can be used to build verifiable presentations, which can also be cryptographically verified. The claims in a credential can be about different subjects. See [VC-DATA].

Wallet Entity is an entity that receives, stores, presents, and manages Credentials and key material of the End-User. There is no single deployment model of a Wallet: Credentials and keys can both be stored/managed locally by the end-user, or by using a remote self-hosted service, or a remote third party service. In the context of this specification, the Wallet acts as an Self-Issued OpenID Provider towards the RP.

Base64url Encoding Base64 encoding using the URL- and filename-safe character set defined in Section 5 of [RFC4648], with all trailing '=' characters omitted (as permitted by Section 3.2 of [RFC4648]) and without the inclusion of any line breaks, whitespace, or other additional characters. Note that the base64url encoding of the empty octet sequence is the empty string. (See Appendix C of [RFC7515] for notes on implementing base64url encoding without padding.).

Abbreviations include OP: OpenID Provider; RP: Relying Party; Self-Issued OP or SIOP or Self-Issued OpenID Provider.

The specification OpenID Connect extends the OpenID Connect Core in the following ways: **Invocation of** a **Self-Issued OP:** mechanisms for how the RP invokes/opens a Self-Issued OP. **Obtaining Self-Issued OP Metadata (Static and Dynamic Discovery):** mechanisms for how the RP discovers Self-issued OP's metadata such as authorization endpoint. **Obtaining RP Metadata:** mechanisms for how the Self-Issued OPs obtain RP metadata both with or without RP pre-registering with the Self-Issued OP. **Self-Issued ID Token:** defines additional claims and processing requirements of ID Tokens issued by Self-Issued OPs. An ID Token is self-issued if the values of the iss and the sub claims are the same. **Support for Self-Asserted Claims:** transporting claims in a Self-Issued ID Token that are not verifiable by the RP. **Support for Cryptographically Verifiable Identifiers:** an identifier that is either based upon or can be resolved to cryptographic key material and is used by the Self-Issued OPs in the sub Claim of the ID Token to prove possession of the cryptographic key used to sign the ID Token. Types of such identifiers are defined in this specification as Subject Syntax Types.

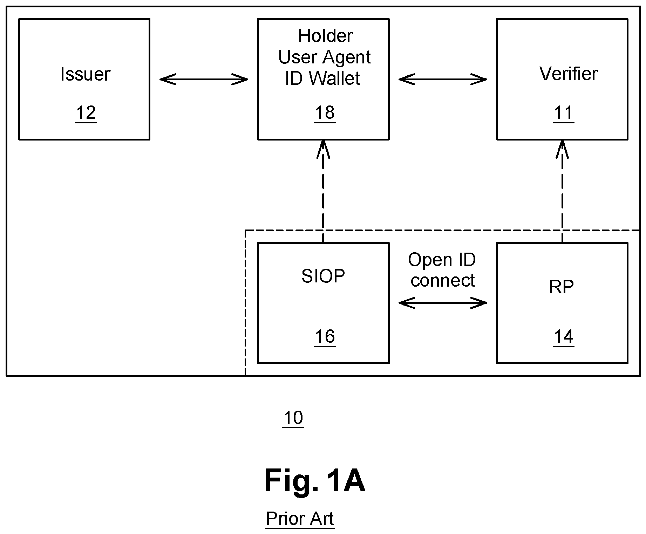

Referring to the existing system 10 in FIG. 1A, a user (or Issuer) 12 attempts to login to a third party website or a website belonging to a relying party 14 via the SIOP 16 using the OpenID Connect protocol. The relying party 14 then makes an authorization request to an Identity Provider or verifier 11. The identity provider 11 can be social media entities such as Google, Facebook, Linkedln, Github, etc. The Identity Provider 11 checks with the user 12 via their holder wallet 18 and attempts to get authorization which includes authentication and consent from the user 12. This model is not convenient and frictionless as it could be in many situations since obtaining authentication and consent creates unnecessary additional steps in certain contexts.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system for self-issued OpenID provider (SIOP) authorization to a relying party application can include additional verifiable attributes in an SIOP request among a device identifier, an organization identifier, and a user identifier, as well as one or more processors and memory operatively coupled to the one or more processors, where the memory includes computer instructions which when executed by the one or more processors causes the one or more processors to perform certain operations. The operations can include fetching an SIOP request with the validation attributes, validating the additional verifiable attributes such as the device identifier with a paired device identifier, requesting user claims from a holder, receiving user claims from the holder, in some embodiments further validating the organization identifier, validating the user identifier, and allowing access to the relying party application.

In some embodiments, the device identifier is a Bluetooth device identifier or a Bluetooth Low Energy (BLE) device identifier.

In some embodiments, the holder is an identity wallet.

In some embodiments, the one or more processors are further configured to perform the operations of allowing access to the relying party application without user consent by sending an SIOP response to the relying party as per defined policies or configurations. In some embodiments, the relying party validates a token and user claims before allowing access to the relying party application.

In some embodiments, the one or more processors are further configured to perform the operations of allowing access to the relying party application without user consent by sending an SIOP response to the relying party if all the validation attributes match.

In some embodiments, the one or more processors are further configured to perform the operation of allowing access to the relying party application by first prompting for user consent, receiving user consent, and sending an SIOP response to the relying party. In some embodiments, the relying party validates a token and user claims before allowing access to the relying party application.

In some embodiments, the one or more processors are further configured to perform the operation of allowing access to the relying party application by first prompting for authentication, receiving approval for authentication, and sending an SIOP response to the relying party. In some embodiments, the relying party validates a token and user claims before allowing access to the relying party application.

In some embodiments, the one or more processors are further configured to perform the operation of allowing access to the relying party application by first prompting for user consent or authentication if one or more validation attributes fail to match, receiving approval for the user consent or authentication, and sending an SIOP response to the relying party, where the relying party validates a token and user claims before granting access to the relying party application.

In some embodiments, a system for self-issued OpenID provider (SIOP) authorization to a relying party application can include a mobile device having validation attributes of at least one or more among a Bluetooth device identifier or Bluetooth Low Energy device identifier, an organization identifier, and a user identifier (as defined per a configuration policy). The system can further include one or more processors and memory operatively coupled to the one or more processors, where the memory includes computer instructions which when executed by the one or more processors causes the one or more processors to perform certain operations. The operations can include fetching an SIOP request with the validation attributes, validating the validation attributes such as the device identifier with a paired device identifier, requesting user claims from a holder ID Wallet, receiving user claims from the holder, (in some embodiments further validating other attributes such as validating the organization identifier and/or validating the user identifier), and allowing access to the relying party application without user consent by sending an SIOP response to the relying party if all the validation attributes match or allowing access to the relying party application by first prompting for user consent or authentication if one or more validation attributes fail to match, receiving approval for the user consent or authentication, and sending an SIOP response to the relying party upon approval.

In some embodiments, the mobile device has one or more additional validation attributes selected among an Internet Protocol address, a Wi-Fi address, a Secure Element Identifier (SEID), an Embedded Identity Document (EID), a International Mobile Equipment Identity (IMEI), an Integrated Circuit Card Identifier (ICCID), a Mobile Equipment Identifier (MEID) or an IMEI2.

In some embodiments, a method for self-issued OpenID provider (SIOP) authorization to a relying party application at a mobile device having validation attributes of at least one or more among a device identifier, an organization identifier, and a user identifier. The method can include the steps of fetching an SIOP request with the validation attributes, validating the validation attribute or attributes such as the device identifier with a paired device identifier, in some embodiments, validating further attributes such as the organization identifier or the user identifier, requesting user claims from a holder, receiving user claims from the holder, , and allowing access to the relying party application.

In some embodiments, the one or more processors are further configured to perform the operations of allowing access to the relying party application without user consent by sending an SIOP response to the relying party.

In some embodiments, the one or more processors are further configured to perform the operations of allowing access to the relying party application without user consent by sending an SIOP response to the relying party if all the validation attributes match.

In some embodiments, the one or more processors are further configured to perform the operation of allowing access to the relying party application by first prompting for user consent, receiving user consent, and sending an SIOP response to the relying party.

In some embodiments, the one or more processors are further configured to perform the operation of allowing access to the relying party application by first prompting for authentication, receiving approval for authentication, and sending an SIOP response to the relying party. In some embodiments, the relying party validates a token and user claims before allowing access to the relying party application.

In some embodiments, the one or more processors are further configured to perform the operation of allowing access to the relying party application by first prompting for user consent or authentication if one or more validation attributes fail to match, receiving approval for the user consent or authentication, and sending an SIOP response to the relying party, wherein the relying party validates a token and user claims before granting access to the relying party application.

### BRIEF DESCRIPTION OF THE DRAWINGS

The accompanying drawings, which are incorporated in and constitute a part of this description, illustrate embodiments consistent with the embodiments and, together with the description, serve to explain the principles of the embodiments.
**FIG. 1A** illustrates a flow diagram of an existing OpenID Connect protocol that uses the SIOP process;
**FIG. 1B** illustrates a component flow diagram of an improved SIOP process or method using additional verification or validation parameters in accordance with the embodiments;
**FIG. 2** illustrates a sequence diagram of system components and a corresponding flow chart of another method of SIOP authentication with extended verifiable attributes in accordance with the embodiments;
**FIG. 3** illustrates a flow chart of a method of SIOP authentication with extended verifiable attributes in accordance with the embodiments.

Specific embodiments have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments. Instead, they are merely examples of apparatuses and methods consistent with aspects related to the embodiments as recited in the appended claims.

In some embodiments, the systems and methods herein provide for adaptive authentication and authorization based on validation parameters. The embodiments further streamline the process of authentication and authorization for trusted applications without user intervention or consent in certain instances.

In some embodiments, the system can include an extended SIOP SDK that contains an endpoint that is capable of generating requests containing the additional verifiable attributes. The additional verifiable attributes can include, but are not limited to a BLE/Bluetooth device ID, a user's Organization, and User ID.

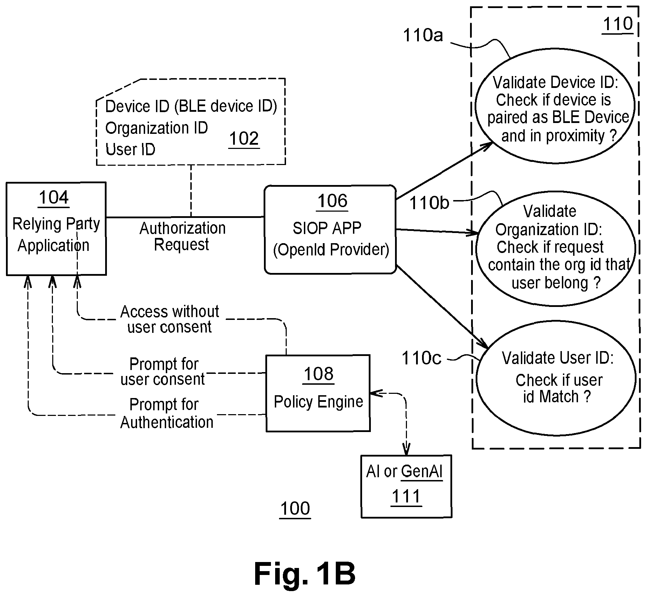

The embodiments illustrate with reference to the system 100 of FIG. 1B, an extended Self-issued OpenID Provider application 106 with policy engine 108 that provides a functionality to validate verifiable attributes 102 fetched from the SIOP authorization request from a relying party (RP) 104 based on the configurable adaptive Access policies. The SIOP application 106 will validate (110) a plurality of extended attributes. For example, as noted above, the SIOP APP 106 can initiate the validation of the device ID (110a) by checking if a user's mobile device is paired with a particular BLE device having a BLE ID in proximity to the mobile device, the validation of an Organization ID by checking if the authorization requests contains the Organization ID that the user belongs to, and/or the validation of the User ID for a match. Based on the policies in or accessed by the policy engine (108), the relying party 104 can grant access to a requested application without user consent, or alternatively prompt for user consent or further prompt for authentication. Note that the policies or policy engine 108 may come preset with a factory setting with a given policy or policy set, or maybe configurable by an administrator or other user, or may be modified using an artificial intelligence module or generative artificial intelligence module 111. For example, the AI or generative AI can modify the policy or policies over time as the system is used to provide additional access without user consent in other situations where not all the additional validation attributes were validated and yet avoid high risk actions circumventing the authentication process. Or the AI or generative AI can find or extract additional attributes not originally used in the initial implemented version of the system to make additional policies or variant policies or modify the existing policies.

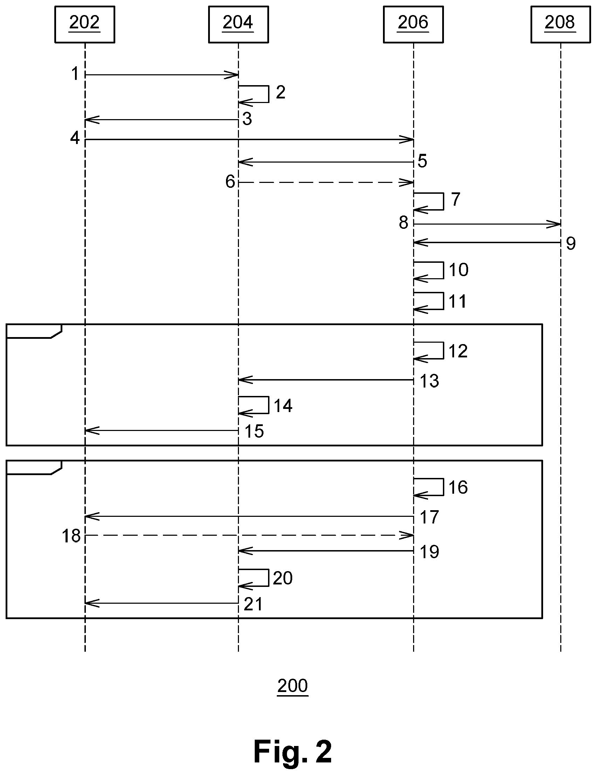

In some embodiments with reference to FIG. 2, a system 200 can include a user 202 that makes a request of a relying party 204 at step 1 for access to a relying party application. The relying party 204 with use of the extended SIOP attributes and an SIOP application 206 on a mobile device along with a holder or ID wallet 208 can enable or allow a more flexible access to the relying party application. More particularly, the (SIOP) authorization to a relying party application can include a mobile device having validation attributes, in some embodiments, having one, two or more attributes among a device identifier, an organization identifier, and a user identifier (as per configured policies). The system can include one or more processors and memory operatively coupled to the one or more processors, where the memory includes computer instructions which when executed by the one or more processors causes the one or more processors to perform certain operations. In some embodiments, the system and method can include the steps of having the relying party 204 initiating a call for an SIOP endpoint at step 2 and having the relying party 204 presenting a QR code to the user 202 at step 3. At step 4, the user 202 can have the SIOP application 206 on their mobile phone scan the QR code, whereupon the SIOP application 206 initiates an instruction to the relying party 204 to fetch the SIOP request a step 5. At step 6, the relying party 204 sends the SIOP request to the SIOP Application 206 with the additional validation attributes such as the Device ID, Organization ID, and the User ID. At step 7, the SIOP Application can validate the device ID with the paired Bluetooth or paired BLE devices and their respective IDs. At step 8, the SIOP application 206 can request user claims from the holder or ID wallet 208 and the holder or wallet 208 correspondingly can return the requested user claims at step 9. At step 10, the SIOP Application 206 can validate the organization ID and at step 11, the SIOP Application 206 can validate the User ID.

In some embodiments, the system 200 can allow authentication without user consent at step 12 when all the verifiable parameters match according to a validation policy. More particularly, the validation policy can be one or more policies configured in an SIOP policy engine. As noted above, the configuration can be preconfigured or configured by an administrator or other user, or be dynamically configured by an AI or Generative AI module. In such instances, the SIOP application 206 can send an SIOP response at step 13 that can include a token and user claims. At step 14, the Relying Party 204 can validate the token and user claims and subsequently allow access to the relying party application (requested from Step 1) at Step 15.

In some embodiments, the system 200 and more particularly, the SIOP application 206 can alternatively (instead of allowing authentication and access without user consent) prompt for user consent or Authentication at Step 16. At step 17, the SIOP Application 206 prompts the user 202 for consent and to share user claims with the Relying Party 204. If the User 202 provides approval (for consent or authentication) at Step 18, the SIOP Application 206 then sends at Step 19 an SIOP response to the Relying Party 204. The Relying Party 206 at Step 20 then validates a token and User Claims and subsequently allows access to the Relying Party application to the User 202 at step 21.

In some embodiments, the operations can generally include fetching an SIOP request with the validation attributes, validating the validation attributes (such as validating a device identifier with a paired device identifier, validating the organization identifier, and/or validating the user identifier), requesting user claims from a holder, receiving user claims from the holder, and allowing access to the relying party application. Of course, the embodiments are not limited to the validation attributes disclosed. Other attributes and combination of attributes can be used with corresponding policies to provide smoother and more flexible authentication and access procedures. Further note that embodiments are not limited by the order in which the method steps or operations are presented in the specification or in the claims.

In some embodiments, the device identifier is a Bluetooth device identifier or a Bluetooth Low Energy (BLE) device identifier.

In some embodiments, the holder is an identity wallet.

In some embodiments, the one or more processors are further configured to perform the operations of allowing access to the relying party application without user consent by sending an SIOP response to the relying party. In some embodiments, the relying party validates a token and user claims before allowing access to the relying party application (See Steps 14 or 20 of FIG. 2).

In some embodiments, the one or more processors are further configured to perform the operations of allowing access to the relying party application without user consent by sending an SIOP response to the relying party if all the validation attributes match (See Step 13 of FIG. 2).

In some embodiments, the one or more processors are further configured to perform the operation of allowing access to the relying party application by first prompting for user consent, receiving user consent, and sending an SIOP response to the relying party (See Steps 17 and 19 of FIG. 2). In some embodiments, the relying party validates a token and user claims before allowing access to the relying party application (See Steps 20 and 21 of FIG. 2).

In some embodiments, the one or more processors are further configured to perform the operation of allowing access to the relying party application by first prompting for authentication, receiving approval for authentication, and sending an SIOP response to the relying party. In some embodiments, the relying party validates a token and user claims before allowing access to the relying party application.

In some embodiments, the one or more processors are further configured to perform the operation of allowing access to the relying party application by first prompting for user consent or authentication if one or more validation attributes fail to match, receiving approval for the user consent or authentication, and sending an SIOP response to the relying party, wherein the relying party validates a token and user claims before granting access to the relying party application.

In some particular embodiments, a system for self-issued OpenID provider (SIOP) authorization to a relying party application can include a mobile device having validation attributes of at least one or more among a Bluetooth device identifier or Bluetooth Low Energy device identifier, an organization identifier, and a user identifier. The system can further include one or more processors and memory operatively coupled to the one or more processors, where the memory includes computer instructions which when executed by the one or more processors causes the one or more processors to perform certain operations. The operations can include fetching an SIOP request with the validation attributes, validating the validation attributes (such as the device identifier with a paired device identifier, and/or validating the organization identifier, and/or validating the user identifier), requesting user claims from a holder ID Wallet, receiving user claims from the holder, and allowing access to the relying party application without user consent by sending an SIOP response to the relying party if all the validation attributes match or allowing access to the relying party application by first prompting for user consent or authentication if one or more validation attributes fail to match, receiving approval for the user consent or authentication, and sending an SIOP response to the relying party. (See FIG. 2)

In some embodiments, the mobile device can have one or more additional validation attributes selected among an Internet Protocol address, a Wi-Fi address, a Secure Element Identifier (SEID), an Embedded Identity Document (EID), an International Mobile Equipment Identity (IMEI), an Integrated Circuit Card Identifier (ICCID), a Mobile Equipment Identifier (MEID) or an IMEI2. Again, the embodiments are not limited to the particular additional attributes or parameters disclosed, but they can serve as sources of additional verification accordingly to policies. The policies and attributes may be different based on the application being requested. The more sensitive an application (such as a banking application or financial application), the more additional verification attributes or additional steps such as user consent and authentication that may be required by a particular policy. For applications that are not that sensitive (like a game), the additional verification or validation attributes can be used in any combination to allow access to a Relying Party application without user consent or authentication accordingly to a particular policy. Thus providing flexibility and generally a smoother accessing experience for the user for a number of applications.

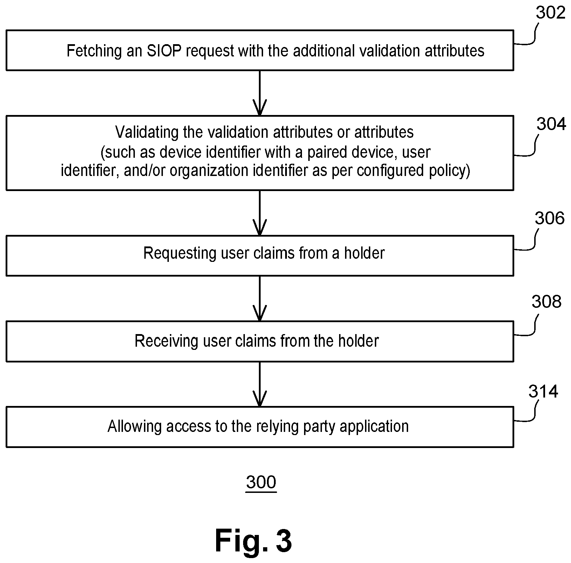

In some embodiments with reference to FIG. 3, a method 300 for self-issued OpenID provider (SIOP) authorization to a relying party application at a mobile device is shown having validation attributes of at least one or more among a device identifier, an organization identifier, and a user identifier (per configured polices). Note that the configured policies may require just one validation attribute, or any number of attributes in any combination within the contemplated scope of the embodiments. Further, the few validation attributes disclosed represent just a few examples within the scope of the embodiments and should not be limited in terms of the types and number of attributes within contemplation of the claimed embodiments. The method 300 can include the steps of fetching at 302 an SIOP request with the validation attributes, validating at 304 the device identifier with a paired device identifier, requesting at 306 user claims from a holder, receiving at 308 user claims from the holder, validating at 310 the organization identifier, validating at 312 the user identifier, and allowing access at 314 to the relying party application.

In some embodiments, the method can include the step of allowing access to the relying party application without user consent by sending an SIOP response to the relying party.

In some embodiments, method can include the step of allowing access to the relying party application without user consent by sending an SIOP response to the relying party if all the validation attributes match.

In some embodiments, the method can include the step of allowing access to the relying party application by first prompting for user consent, receiving user consent, and sending an SIOP response to the relying party.

In some embodiments, method can include the step of allowing access to the relying party application by first prompting for authentication, receiving approval for authentication, and sending an SIOP response to the relying party. In some embodiments, the relying party validates a token and user claims before allowing access to the relying party application.

In some embodiments, the method can include the step of allowing access to the relying party application by first prompting for user consent or authentication if one or more validation attributes fail to match, receiving approval for the user consent or authentication, and sending an SIOP response to the relying party, wherein the relying party validates a token and user claims before granting access to the relying party application.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system (100) for self-issued OpenID provider (SIOP) authorization to a relying party application (204), comprising:
a mobile device (206) having validation attributes of at least one or more among a device identifier, an organization identifier, and a user identifier (102) as per configured policies in an SIOP policy engine (108);
one or more processors and memory operatively coupled to the one or more processors, wherein the memory includes computer instructions which when executed by the one or more processors causes the one or more processors to perform the operations of:
fetch (302) an SIOP request with the validation attributes;
validate (304) the validation attributes per the configured policies in the SIOP policy engine;
request (306) user claims from a holder;
receive (308) user claims from the holder; and
allow (314) access to the relying party application.

2. The system of claim 1, wherein the device identifier (102) is a Bluetooth device identifier or a Bluetooth Low Energy (BLE) device identifier and wherein the one or more processors validate (304) the validation attributes by validating the device identifier with a paired device identifier, validating the organization identifier with a stored organization identifier value, and validating the user identifier with a stored user identifier value.

3. The system of claim 1, wherein the holder is an identity wallet (208).

4. The system of claim 1, wherein the one or more processors are further configured to perform the operations of allowing access (200, 12-15) to the relying party application without user consent by sending an SIOP response to the relying party.

5. The system of claim 4, wherein the relying party validates (200, 14) a token and user claims before allowing access to the relying party application.

6. The system of claim 1, wherein the one or more processors are further configured to perform the operations of allowing access to the relying party application without user consent by sending an SIOP response (200, 13) to the relying party (204) if all the validation attributes match.

7. The system of claim 1, wherein the one or more processors are further configured to perform the operation of allowing access to the relying party application by first prompting (200, 16) for user consent, receiving (200, 18) user consent, and sending (200, 19) an SIOP response to the relying party.

8. The system of claim 7, wherein the relying party validates (200, 20) a token and user claims before allowing access to the relying party application.

9. The system of claim 1, wherein the one or more processors are further configured to perform the operation of allowing access to the relying party application by first prompting for authentication (200, 16), receiving approval for authentication (200, 18), and sending (200, 19) an SIOP response to the relying party.

10. The system of claim 9, wherein the relying party (204) validates (200, 20) a token and user claims before allowing access to the relying party application.

11. The system of claim 1, wherein the one or more processors are further configured to perform the operation of allowing access to the relying party application by first prompting for user consent or authentication (200, 16) if one or more validation attributes fail to match, receiving approval (200, 18) for the user consent or authentication, and sending (200, 19) an SIOP response to the relying party, wherein the relying party validates a token and user claims before granting access to the relying party application.

12. A system (100) for self-issued OpenID provider (SIOP) authorization to a relying party application (204), comprising:
a mobile device (206) having validation attributes of at least one or more among a Bluetooth device identifier or Bluetooth Low Energy device identifier (102), an organization identifier, and a user identifier as configured in an SIOP policy engine (108);
one or more processors and memory operatively coupled to the one or more processors, wherein the memory includes computer instructions which when executed by the one or more processors causes the one or more processors to perform the operations of:
fetch (302) an SIOP request with the validation attributes;
validate (304) the device identifier with a paired device identifier;
validate (304) the organization identifier;
validate (304) the user identifier
request (306) user claims from a holder ID Wallet;
receive (308) user claims from the holder; and
allow access (314) to the relying party application without user consent by sending an SIOP response to the relying party if all the validation attributes match or allow access to the relying party application by first prompting for user consent or authentication if one or more validation attributes fail to match, receiving approval for the user consent or authentication, and sending an SIOP response to the relying party.

13. The system of claim 12, wherein the mobile device has one or more additional validation attributes selected among an Internet Protocol address, a Wi-Fi address, a Secure Element Identifier (SEID), an Embedded Identity Document (EID), a International Mobile Equipment Identity (IMEI), an Integrated Circuit Card Identifier (ICCID), a Mobile Equipment Identifier (MEID) or an IMEI2.

14. A method (200, 300) for self-issued OpenID provider (SIOP) authorization to a relying party application (204) at a mobile device (206) having validation attributes of at least two among a device identifier, an organization identifier, and a user identifier and wherein the mobile device further includes one or more processors and memory operatively coupled to the one or more processors, and wherein the memory includes computer instructions which when executed by the one or more processors causes the one or more processors to perform the operations of:
fetching (302) an SIOP request with the validation attributes;
validating (304) the device identifier with a paired device identifier;
validating (304) the organization identifier;
validating (304) the user identifier;
requesting (306) user claims from a holder;
receiving (308) user claims from the holder; and
allowing access (314) to the relying party application.

15. The method of claim 14, wherein the one or more processors are further configured to perform the operations (200, 12-15) of allowing access to the relying party application without user consent by sending an SIOP response (200, 13) to the relying party.

16. The method of claim 14, wherein the one or more processors are further configured to perform the operations of allowing access to the relying party application without user consent by sending an SIOP response (200, 13) to the relying party if all the validation attributes match.

17. The method of claim 14, wherein the one or more processors are further configured to perform the operation of allowing access to the relying party application by first prompting for user consent (200, 16), receiving user consent (200, 18), and sending (200, 19) an SIOP response to the relying party.

18. The method of claim 14, wherein the one or more processors are further configured to perform the operation of allowing access to the relying party application by first prompting for authentication (200, 16), receiving approval for authentication (200, 18), and sending (200, 19) an SIOP response to the relying party.

19. The method of claim 18, wherein the relying party (204) validates (200, 20) a token and user claims before allowing access to the relying party application.

20. The method of claim 14, wherein the one or more processors are further configured to perform the operation of allowing access to the relying party application by first prompting for user consent or authentication (200, 16) if one or more validation attributes fail to match, receiving (200, 18) approval for the user consent or authentication, and sending (200, 19) an SIOP response to the relying party, wherein the relying party validates (200, 20) a token and user claims before granting access to the relying party application.
